(19) Europäisches Patentamt
European Patent Office
Office européen des brevets

(11) **EP 3 730 575 A1**

(12) **EUROPEAN PATENT APPLICATION**
published in accordance with Art. 153(4) EPC

(43) Date of publication:
**28.10.2020 Bulletin 2020/44**

(21) Application number: **18891489.9**

(22) Date of filing: **18.12.2018**

(51) Int Cl.:
**C09K 5/04** (2006.01)        **F25B 1/00** (2006.01)

(86) International application number:
**PCT/JP2018/046639**

(87) International publication number:
**WO 2019/124400 (27.06.2019 Gazette 2019/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.12.2017 JP 2017242183**

(71) Applicant: **DAIKIN INDUSTRIES, LTD.**
**Osaka 530-8323 (JP)**

(72) Inventors:
• **ITANO, Mitsushi**
  **Osaka-shi, Osaka 530-8323 (JP)**

• **KARUBE, Daisuke**
  **Osaka-shi, Osaka 530-8323 (JP)**
• **YOTSUMOTO, Yuuki**
  **Osaka-shi, Osaka 530-8323 (JP)**
• **TAKAHASHI, Kazuhiro**
  **Osaka-shi, Osaka 530-8323 (JP)**
• **TAKAKUWA, Tatsuya**
  **Osaka-shi, Osaka 530-8323 (JP)**
• **KOMATSU, Yuzo**
  **Osaka-shi, Osaka 530-8323 (JP)**

(74) Representative: **Hoffmann Eitle**
**Patent- und Rechtsanwälte PartmbB**
**Arabellastraße 30**
**81925 München (DE)**

(54) **COOLANT-CONTAINING COMPOSITION, USE FOR SAME, REFRIGERATOR HAVING SAME, AND METHOD FOR OPERATING REFRIGERATOR**

(57)     An object is to provide a mixed refrigerant having four types of performance, i.e., a coefficient of performance and a refrigerating capacity that are equivalent to those of R410A, a sufficiently low GWP, and a lower flammability (Class 2L) according to the ASHRAE standard. Provided as a means for a solution is a composition comprising a refrigerant, the refrigerant comprising trans-1,2-difluoroethylene (HFO-1132(E)) and trifluoroethylene (HFO-1123) in a total amount of 99.5 mass% or more based on the entire refrigerant, and the refrigerant comprising 62.5 mass% to 72.5 mass% of HFO-1132(E) based on the entire refrigerant.

EP 3 730 575 A1

**Description**

Technical Field

The present disclosure relates to a composition comprising a refrigerant, use of the composition, a refrigerating machine having the composition, and a method for operating the refrigerating machine.

Background Art

R410A is currently used as an air conditioning refrigerant for home air conditioners etc. R410A is a two-component mixed refrigerant of difluoromethane ($CH_2F_2$: R32) and pentafluoroethane ($C_2HF_5$: R125), and is a pseudo-azeotropic composition.
However, the global warming potential (GWP) of R410A is 2088. Due to growing concerns about global warming, R32, which has a GWP of 675, has been increasingly used.
For this reason, various low-GWP mixed refrigerants that can replace R410A have been proposed (PTL 1).

Citation List

Patent Literature

PTL 1: WO2015/141678

Summary of Invention

Technical Problem

The present inventors performed independent examination, and conceived of the idea that no prior art had developed refrigerant compositions having four types of performance, i.e., a coefficient of performance (COP) and a refrigerating capacity (also referred to as "cooling capacity" or "capacity") that are equivalent to those of R410A, a sufficiently low GWP, and a lower flammability (Class 2L) according to the standard of the American Society of Heating, Refrigerating and Air-Conditioning Engineers (ASHRAE). An object of the present disclosure is to solve this unique problem.

Solution to Problem

Item 1.
A composition comprising a refrigerant,
the refrigerant comprising trans-1,2-difluoroethylene (HFO-1132(E)) and trifluoroethylene (HFO-1123) in a total amount of 99.5 mass% or more based on the entire refrigerant, and
the refrigerant comprising 62.5 mass% to 72.5 mass% of HFO-1132(E) based on the entire refrigerant.
Item 2.
The composition according to Item 1, for use as a working fluid for a refrigerating machine, wherein the composition further comprises a refrigeration oil.
Item 3.
The composition according to Item 1 or 2, for use as an alternative refrigerant for R410A.
Item 4.
Use of the composition according to Item 1 or 2 as an alternative refrigerant for R410A.
Item 5.
A refrigerating machine comprising the composition according to Item 1 or 2 as a working fluid.
Item 6.
A method for operating a refrigerating machine, comprising the step of circulating the composition according to Item 1 or 2 as a working fluid in a refrigerating machine.

Advantageous Effects of Invention

The refrigerant according to the present disclosure has four types of performance, i.e., a coefficient of performance and a refrigerating capacity that are equivalent to those of R410A, a sufficiently low GWP, and a lower flammability (Class 2L) according to the ASHRAE standard.

Brief Description of Drawing

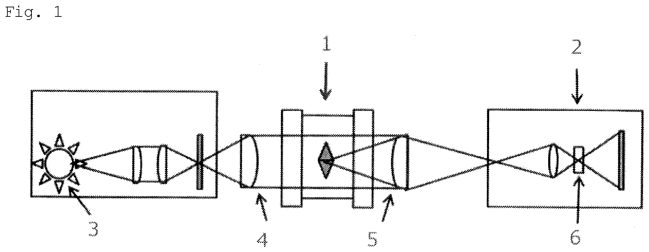

Fig. 1 is a schematic view of an apparatus used in a flammability test.

Description of Embodiments

The present inventors conducted intensive studies to solve the above problem, and consequently found that a composition comprising a refrigerant, the refrigerant comprising trans-1,2-difluoroethylene (HFO-1132(E)) and trifluoroethylene (HFO-1123) in a total amount of 99.5 mass% or more based on the entire refrigerant, and the refrigerant comprising 62.5 mass% to 72.5 mass% of HFO-1132(E) based on the entire refrigerant, has the above properties.
The present disclosure has been completed as a result of further research based on this finding. The present disclosure includes the following embodiments.

Definition of Terms

In the present specification, the term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC). Non-fluorocarbon compounds include propane (R290), propylene (R1270), butane (R600), isobutane (R600a), carbon dioxide (R744), ammonia (R717), and the like.
In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."
In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.
The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.
In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.
In the present specification, a refrigerant having a "lower flammability" means that it is determined to be "Class 2L" according to the US ANSI/ASHRAE Standard 34-2013.

1. Refrigerant

1.1 Refrigerant Component

The refrigerant according to the present disclosure is a mixed refrigerant comprising trans-1,2-difluoroethylene (HFO-1132(E)) and trifluoroethylene (HFO-1123) in a total amount of 99.5 mass% or more based on the entire refrigerant, and the refrigerant comprising 62.5 mass% to 72.5 mass% of HFO-1132(E) based on the entire refrigerant.

The refrigerant according to the present disclosure has various properties that are desirable as an R410A-alternative refrigerant, i.e., (1) a coefficient of performance equivalent to that of R410A, (2) a refrigerating capacity equivalent to that of R410A, (3) a sufficiently low GWP, and (4) a lower flammability (Class 2L) according to the ASHRAE standard.

The refrigerant according to the present disclosure is particularly preferably a mixed refrigerant comprising 72.5 mass% or less of HFO-1132(E), because it has a lower flammability (Class 2L) according to the ASHRAE standard.

The refrigerant according to the present disclosure is more preferably a mixed refrigerant comprising 62.5 mass% or more of HFO-1132(E). In this case, the refrigerant according to the present disclosure has a superior coefficient of performance relative to that of R410A, the polymerization reaction of HFO-1132(E) and/or HFO-1123 is further suppressed, and the stability is further improved.

The refrigerant according to the present disclosure may further comprise other additional refrigerants in addition to HFO-1132(E) and HFO-1123, as long as the above properties and effects are not impaired. In this respect, the refrigerant according to the present disclosure preferably comprises HFO-1132(E) and HFO-1123 in a total amount of 99.75 mass% or more, and more preferably 99.9 mass% or more, based on the entire refrigerant.

Such additional refrigerants are not limited, and can be selected from a wide range of refrigerants. The mixed refrigerant may comprise a single additional refrigerant, or two or more additional refrigerants.

## 1.2. Use

The refrigerant according to the present disclosure can be preferably used as a working fluid in a refrigerating machine.

The composition according to the present disclosure is suitable for use as an alternative refrigerant for HFC refrigerants, such as R410A, R407C, and R404A, as well as for HCFC refrigerants, such as R22.

## 2. Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 0 to 1 mass%, and more preferably 0 to 0.1 mass%.

## 2.1. Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

## 2.2. Tracer

A tracer is added to the refrigerant composition according to the present disclosure at a detectable concentration such that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers. It is preferable that a compound that cannot be an impurity inevitably mixed into the refrigerant according to the present disclosure is selected as the tracer.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide ($N_2O$). The tracer is particularly preferably a hydrofluorocarbon, a hydrochlorofluorocarbon, a chlorofluorocarbon, a hydrochlorocarbon, a fluorocarbon, or a fluoroether.

Specifically, the following compounds are preferable as the tracer.

FC-14 (tetrafluoromethane, $CF_4$)
HCC-40 (chloromethane, $CH_3Cl$)
HFC-23 (trifluoromethane, $CHF_3$)
HFC-41 (fluoromethane, $CH_3Cl$)
HFC-125 (pentafluoroethane, $CF_3CHF_2$)
HFC-134a (1,1,1,2-tetrafluoroethane, $CF_3CH_2F$)
HFC-134 (1,1,2,2-tetrafluoroethane, $CHF_2CHF_2$)
HFC-143a (1,1,1-trifluoroethane, $CF_3CH_3$)
HFC-143 (1,1,2-trifluoroethane, $CHF_2CH_2F$)
HFC-152a (1,1-difluoroethane, $CHF_2CH_3$)
HFC-152 (1,2-difluoroethane, $CH_2FCH_2F$)
HFC-161 (fluoroethane, $CH_3CH_2F$)
HFC-245fa (1,1,1,3,3-pentafluoropropane, $CF_3CH_2CHF_2$)
HFC-236fa (1,1,1,3,3,3-hexafluoropropane, $CF_3CH_2CF_3$)
HFC-236ea (1,1,1,2,3,3-hexafluoropropane, $CF_3CHFCHF_2$)
HFC-227ea (1,1,1,2,3,3,3-heptafluoropropane, $CF_3CHFCF_3$)
HCFC-22 (chlorodifluoromethane, $CHClF_2$)
HCFC-31 (chlorofluoromethane, $CH_2ClF$)
CFC-1113 (chlorotrifluoroethylene, $CF_2=CClF$)
HFE-125 (trifluoromethyl-difluoromethyl ether, $CF_3OCHF_2$)
HFE-134a (trifluoromethyl-fluoromethyl ether, $CF_3OCH_2F$)
HFE-143a (trifluoromethyl-methyl ether, $CF_3OCH_3$)
HFE-227ea (trifluoromethyl-tetrafluoroethyl ether, $CF_3OCHFCF_3$)
HFE-236fa (trifluoromethyl-trifluoroethyl ether, $CF_3OCH_2CF_3$)

The tracer compound can be present in the refrigerant composition at a total concentration of about 10 parts per million by weight (ppm) to about 1000 ppm. The tracer compound is preferably present in the refrigerant composition at a total concentration of about 30 ppm to about 500 ppm, and most preferably about 50 ppm to about 300 ppm.

2.3. Ultraviolet Fluorescent Dye

The refrigerant composition according to the present disclosure may comprise a single ultraviolet fluorescent dye, or two or more ultraviolet fluorescent dyes.
The ultraviolet fluorescent dye is not limited, and can be suitably selected from commonly used ultraviolet fluorescent dyes.
Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

2.4. Stabilizer

The refrigerant composition according to the present disclosure may comprise a single stabilizer, or two or more stabilizers.
The stabilizer is not limited, and can be suitably selected from commonly used stabilizers.
Examples of stabilizers include nitro compounds, ethers, and amines.
Examples of nitro compounds include aliphatic nitro compounds, such as nitromethane and nitroethane; and aromatic nitro compounds, such as nitro benzene and nitro styrene.
Examples of ethers include 1,4-dioxane.
Examples of amines include 2,2,3,3,3-pentafluoropropylamine and diphenylamine.
Examples of stabilizers also include butylhydroxyxylene and benzotriazole.
The content of the stabilizer is not limited. Generally, the content of the stabilizer is preferably 0.01 to 5 mass%, and more preferably 0.05 to 2 mass%, based on the entire refrigerant.

### 2.5. Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Generally, the content of the polymerization inhibitor is preferably 0.01 to 5 mass%, and more preferably 0.05 to 2 mass%, based on the entire refrigerant.

### 3. Refrigeration Oil-Containing Working Fluid

The refrigeration oil-containing working fluid according to the present disclosure comprises at least the refrigerant or refrigerant composition according to the present disclosure and a refrigeration oil, for use as a working fluid in a refrigerating machine. Specifically, the refrigeration oil-containing working fluid according to the present disclosure is obtained by mixing a refrigeration oil used in a compressor of a refrigerating machine with the refrigerant or the refrigerant composition. The refrigeration oil-containing working fluid generally comprises 10 to 50 mass% of refrigeration oil.

### 3.1. Refrigeration Oil

The composition according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 to 400 cSt at 40°C is preferable from the standpoint of lubrication.

The refrigeration oil-containing working fluid according to the present disclosure may further optionally contain at least one additive. Examples of additives include compatibilizing agents described below.

### 3.2. Compatibilizing Agent

The refrigeration oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

### 4. Method for Operating Refrigerating Machine

The method for operating a refrigerating machine according to the present disclosure is a method for operating a refrigerating machine using the refrigerant according to the present disclosure.

Specifically, the method for operating a refrigerating machine according to the present disclosure comprises the step of circulating the refrigerant according to the present disclosure in a refrigerating machine.

The embodiments are described above; however, it will be understood that various changes in forms and details can be made without departing from the spirit and scope of the claims.

Examples

The present disclosure is described in more detail below with reference to Examples. However, the present disclosure is not limited to the Examples.

Mixed refrigerants were prepared by mixing HFO-1132(E) and HFO-1123 at mass% based on their sum shown in Tables 1 and 2.

The GWP of compositions each comprising a mixture of R410A (R32 = 50%/R125 = 50%) was evaluated based on the values stated in the Intergovernmental Panel on Climate Change (IPCC), fourth report. The GWP of HFO-1132(E), which was not stated therein, was assumed to be 1 from HFO-1132a (GWP = 1 or less) and HFO-1123 (GWP = 0.3, described in PTL 1). The refrigerating capacity of compositions each comprising R410A and a mixture of HFO-1132(E) and HFO-1123 was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.

Evaporating temperature: 5°C
Condensation temperature: 45°C
Superheating temperature: 1 K
Subcooling temperature: 5 K
Compressor efficiency: 70%

Tables 1 and 2 show GWP, COP, and refrigerating capacity, which were calculated based on these results. The COP and refrigerating capacity are ratios relative to R410A.

The coefficient of performance (COP) was determined by the following formula.

$$COP = (refrigerating\ capacity\ or\ heating\ capacity)/power\ consumption$$

For the flammability, the burning velocity was measured according to the ANSI/ASHRAE Standard 34-2013. Compositions having a burning velocity of 10 cm/s or less were determined to be "Class 2L (lower flammability)."

A burning velocity test was performed using the apparatus shown in Fig. 1 in the following manner. First, the mixed refrigerants used had a purity of 99.5% or more, and were degassed by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0 to 9.9 ms, and the ignition energy was typically about 0.1 to 1.0 J. The spread of the flame was visualized using schlieren photographs. A cylindrical container (inner diameter: 155 mm, length: 198 mm) equipped with two light transmission acrylic windows was used as the sample cell, and a xenon lamp was used as the light source. Schlieren images of the flame were recorded by a high-speed digital video camera at a frame rate of 600 fps and stored on a PC.

Table 1

| Item | Unit | Comparative Example 1 | Comparative Example 2 | Comparative Example 3 | Example 1 | Example 2 | Example 3 |
|---|---|---|---|---|---|---|---|
| | | R410A | HFO-1132E | | | | |
| HFO-1132E | mass% | 0 | 100 | 80 | 72.5 | 70 | 67.5 |
| HFO-1123 | mass% | 0 | 0 | 20 | 27.5 | 30 | 32.5 |
| GWP | - | 2088 | 1 | 1 | 1 | 1 | 1 |
| COP ratio | % (relative to R410A) | 100 | 98 | 95.3 | 94.4 | 94.1 | 93.8 |
| Refrigerating capacity ratio | % (relative to R410A) | 100 | 98 | 102.1 | 103.5 | 103.9 | 104.3 |

(continued)

| Item | Unit | Comparative Example 1 | Comparative Example 2 | Comparative Example 3 | Example 1 | Example 2 | Example 3 |
| --- | --- | --- | --- | --- | --- | --- | --- |
| | | R410A | HFO-1132E | | | | |
| Discharge pressure | MPa | 2.7 | 2.7 | 2.9 | 3.0 | 3.0 | 3.1 |
| Burning velocity | cm/sec | Non-flammable | 20 | 13 | 10 | 9 | 9 or less |

Table 2

| Item | Unit | Example 4 | Example 5 | Comparative Example 4 | Comparative Example 5 | Comparative Example 6 | Comparative Example 7 |
|---|---|---|---|---|---|---|---|
| | | | | | | | HFO-1123 |
| HFO-1132E | mass% | 65 | 62.5 | 60 | 50 | 25 | 0 |
| HFO-1123 | mass% | 35 | 37.5 | 40 | 50 | 75 | 100 |
| GWP | - | 1 | 1 | 1 | 1 | 1 | 1 |
| COP ratio | % (relative to R410A) | 93.5 | 93.2 | 92.9 | 91.8 | 89.9 | 89.9 |
| Refrigerating capacity ratio | % (relative to R410A) | 104.7 | 105.0 | 105.4 | 106.6 | 108.1 | 107.0 |
| Discharge pressure | MPa | 3.1 | 3.1 | 3.1 | 3.2 | 3.4 | 3.4 |
| Burning velocity | cm/sec | 9 or less | 9 or less | 9 or less | 9 or less | 9 or less | 5 |

EP 3 730 575 A1

The compositions each comprising 62.5 mass% to 72.5 mass% of HFO-1132(E) based on the entire composition are stable while having a low GWP (GWP = 1), and they ensure ASHRAE 2L flammability. Further, surprisingly, they can ensure performance equivalent to that of R410A.

Description of Reference Numerals

1:    Sample cell
2:    High-speed camera
3:    Xenon lamp
4:    Collimating lens
5:    Collimating lens
6:    Ring filter


Claims

1.  A composition comprising a refrigerant,
    the refrigerant comprising trans-1,2-difluoroethylene (HFO-1132(E)) and trifluoroethylene (HFO-1123) in a total amount of 99.5 mass% or more based on the entire refrigerant, and
    the refrigerant comprising 62.5 mass% to 72.5 mass% of HFO-1132(E) based on the entire refrigerant.

2.  The composition according to claim 1, for use as a working fluid for a refrigerating machine, wherein the composition further comprises a refrigeration oil.

3.  The composition according to claim 1 or 2, for use as an alternative refrigerant for R410A.

4.  Use of the composition according to claim 1 or 2 as an alternative refrigerant for R410A.

5.  A refrigerating machine comprising the composition according to claim 1 or 2 as a working fluid.

6.  A method for operating a refrigerating machine, comprising the step of circulating the composition according to claim 1 or 2 as a working fluid in a refrigerating machine.

Fig. 1

## INTERNATIONAL SEARCH REPORT

| | International application No. |
|---|---|
| | PCT/JP2018/046639 |

A. CLASSIFICATION OF SUBJECT MATTER
Int.Cl. C09K5/04(2006.01)i, F25B1/00(2006.01)i
According to International Patent Classification (IPC) or to both national classification and IPC

B. FIELDS SEARCHED

Minimum documentation searched (classification system followed by classification symbols)
Int.Cl. C09K5/04, F25B1/00

| Documentation searched other than minimum documentation to the extent that such documents are included in the fields searched | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2015/141678 A1 (ASAHI GLASS CO., LTD.) 24 September 2015, claims, paragraphs [0001]–[0012], [0017]–[0041], [0123], examples, etc. & US 2017/0002245 A1, claims, paragraphs [0001]–[0015], [0021]–[0055], [0150], examples & EP 3121242 A1 & CN 106133110 A | 1–6 |
| A | WO 2015/186670 A1 (ASAHI GLASS CO., LTD.) 10 December 2015 & US 2017/0058174 A1 & EP 3153561 A1 & CN 106414653 A | 1–6 |
| A | WO 2015/186557 A1 (ASAHI GLASS CO., LTD.) 10 December 2015, paragraph [0039], etc. & US 2017/0058173 A1, paragraph [0041] & EP 3153559 A1 & CN 106414654 A | 1–6 |
| A | WO 2015/115252 A1 (ASAHI GLASS CO., LTD.) 06 August 2015, paragraphs [0067], [0068], [0074], etc. & US 2016/0333243 A1, paragraph [0082], tables 2, 3 & EP 3101082 A1 & CN 106029821 A | 1–6 |

☒ Further documents are listed in the continuation of Box C.　　☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 28 February 2019 (28.02.2019) | 12 March 2019 (12.03.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
|---|
| PCT/JP2018/046639 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2016-172869 A (ASAHI GLASS CO., LTD.) 29 September 2016, table 1, etc. & US 2014/0070132 A1, table 1 & EP 2711405 A1 & CN 103562338 A & RU 2013156380 A & CN 106085363 A | 1-6 |
| A | JP 2016-011423 A (ASAHI GLASS CO., LTD.) 21 January 2016, table 3, etc. & US 2016/0333243 A1, table 3 & EP 3101082 A1 & CN 106029821 A | 1-6 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015141678 A